Europäisches Patentamt

(19) European Patent Office

Office européen des brevets

(11) Numéro de publication: **0 163 584**
**A1**

## (12) DEMANDE DE BREVET EUROPEEN

(21) Numéro de dépôt: 85420075.5

(22) Date de dépôt: 25.04.85

(51) Int. Cl.⁴: **G 01 N 1/10**
**F 01 M 11/04, F 16 N 31/00**

(30) Priorité: 27.04.84 FR 8407164

(43) Date de publication de la demande:
04.12.85 Bulletin 85/49

(84) Etats contractants désignés:
DE GB IT SE

(71) Demandeur: S.A. DES ETABLISSEMENTS STAUBLI
(France)

F-74210 Faverges(FR)

(72) Inventeur: Truchet, Gaston
Impasse des Mésanges
F-74210 Faverges(FR)

(74) Mandataire: Monnier, Guy et al,
Cabinet Monnier 142-150 Cours Lafayette B.P. 3058
F-69393 Lyon Cédex 03(FR)

(54) Appareillage pour le prélèvement d'echantillons d'huile dans le carter des moteurs à explosions et similaires.

(57) Il comprend un clapet chargé (13) monté à l'intérieur d'un manchon (10–11–12) vissé dans l'ouverture usuelle (4) du carter à la place du bouchon classique, tandis que le récipient de prélèvement (3) présente une bague (20) agencée de manière à former poussoir pour le clapet précité quand ce récipient est convenablement présenté et repoussé.

Fig. 2

EP 0 163 584 A1

La présente invention a pour objet un appareillage propre à permettre, dans les meilleurs conditions de simplicité, de fiabilité et de rapidité, le prélèvement d'échantillons d'huile à partir du carter des moteurs à explosions, en vue du contrôle des propriétés lubrifiantes en laboratoire.

L'appareillage suivant l'invention est principalement remarquable en ce qu'il comprend en combinaison d'une part un clapet chargé monté à l'intérieur d'un manchon fileté propre à être vissé dans l'ouverture usuelle de vidange d'un carter, et d'autre part un récipient dont l'ouverture supérieure est munie axialement d'un poussoir annulaire apte à être introduit à force dans l'extrémité extérieure du manchon précité afin de repousser la queue d'actionnement, elle-même prévue annulaire, du clapet chargé qui peut ainsi être maintenu ouvert, à l'encontre de ses moyens de rappel, jusqu'à remplissage du récipient.

On comprend qu'on peut avoir recours soit à des récipients spéciaux conformés pour comporter directement le poussoir annulaire, soit à des récipients de type usuel dans l'ouverture desquels on rapporte un tel poussoir de toute manière appropriée. Dans tous les cas la manoeuvre de l'appareillage est très aisée, ne nécessite aucun outillage et n'implique aucune salissure des mains de la part de l'opérateur.

Le dessin annexé, donné à titre d'exemple, permettra de mieux comprendre l'invention, les caractéristiques qu'elle présente et les avantages qu'elle est susceptible de procurer :

Fig. 1 est une coupe axiale schématique montrant à l'état séparé les différents éléments qui composent l'appareillage suivant l'invention.

Fig. 2 reproduit fig. 1 en illustrant le mode d'utilisation de l'appareillage.

Fig. 3 est une coupe axiale représentant une variante de réalisation du poussoir rapporté sur le col du récipient.

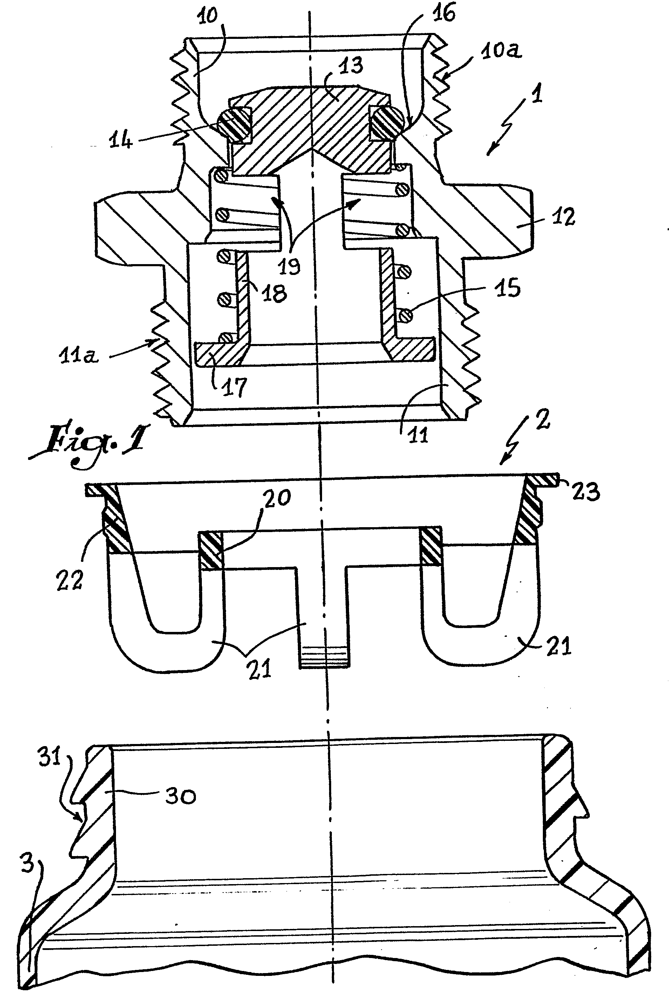

L'appareillage illustré en fig. 1 comprend en premier lieu un manchon 1 présentant deux tubulures 10 et 11 orientées axialement de part et d'autre d'un épanouissement radial 12 conformé à la manière d'un écrou six-pans. A l'intérieur de ce manchon 1 est monté un clapet axial 13 pourvu d'un joint 14 qu'un ressort 15 maintient appliqué contre un siège annulaire 16 tourné vers le haut ; ce ressort 15 prend appui d'une part contre un épaulement annulaire du manchon 1, d'autre part contre un rebord d'extrémité 17 prévu en bout de la queue d'actionnement 18 du clapet 13. On observera que cette queue 18, prévue sous forme tubulaire, est découpée de lumières 19 disposées immédiatement au-dessous de la tête du clapet. La tubulure supérieure 10 est filetée en 10a afin de se visser dans l'ouverture taraudée usuelle des carters de moteurs à explosions ; on a ménagé un filetage analogue 11a sur la tubulure 11 en vue du vissage éventuel d'un capuchon de protection, non représenté.

La commande de la queue 18 est opérée à l'aide d'un poussoir annulaire qui, dans l'exemple de réalisation envisagé, a été supposé porté par une pièce indépendante 2 en matière plastique. Cette pièce 2 comprend une bague intérieure ou poussoir 20 propre à être engagé dans le débouché de la tubulure 11 du manchon 1, jusqu'à venir porter contre le rebord 17 de la queue 18. Ce poussoir 20 est relié par des bras arqués 21 à une bague extérieure 22, orientée co-axialement audit poussoir.

La bague 22, pourvue d'un petit rebord annulaire 23, est établie à un diamètre tel qu'elle peut venir se loger à l'intérieur de l'ouverture du goulot 30 d'un récipient 3 en forme de bocal, le rebord 23 venant prendre appui contre le bord terminal dudit goulot. Ce dernier présente un filetage 31 afin de recevoir par vissage un couvercle amovible, non représenté.

En fig. 2, le manchon 1 a été représenté après vissage de sa tubulure filetée 10 à l'intérieur de l'ouverture taraudée 4 d'un carter usuel. Le manchon prend ainsi la place du bouchon classique des carters, mais aussi longtemps que le ressort 15 applique le clapet 13 contre le siège 16, aucune fuite d'huile ne peut intervenir. Le capuchon éventuellement vissé sur le filetage 11a de la tubulure 11 a pour seul but de protéger l'ensemble du manchon 1 et du mécanisme de clapet.

Lorsqu'on désire prélever un échantillon d'huile à partir du carter, il suffit de présenter le récipient 3 muni de la pièce 2 de façon à ce que le poussoir 20 s'engage dans la tubulure 11 et, moyennant un effort de l'opérateur, repousse le rebord 17 de la queue d'actionnement 18 du clapet. Ce dernier se soulève à l'encontre de son ressort 15, si bien que l'huile contenue dans le carter s'écoule à travers les lumières 19 jusqu'à l'intérieur du récipient 3. Quand le niveau désiré a été atteint dans ce récipient, l'opérateur abaisse ce dernier de façon à ce que le clapet 13 vienne à nouveau s'appliquer contre son siège 16, ce qui a pour effet de stopper l'écoulement. Le récipient 3 ainsi rempli est bouché et peut être envoyé à un laboratoire pour l'analyse de son contenu.

Les opérations sont très rapides et très simples. Elles ne nécessitent aucun outillage et ne provoquent pas de salissure. Si l'on prend soin de réaliser le récipient 3 en une matière plastique translucide, on est en mesure de contrôler le niveau d'huile en évitant ainsi tout risque de débordement intempestif.

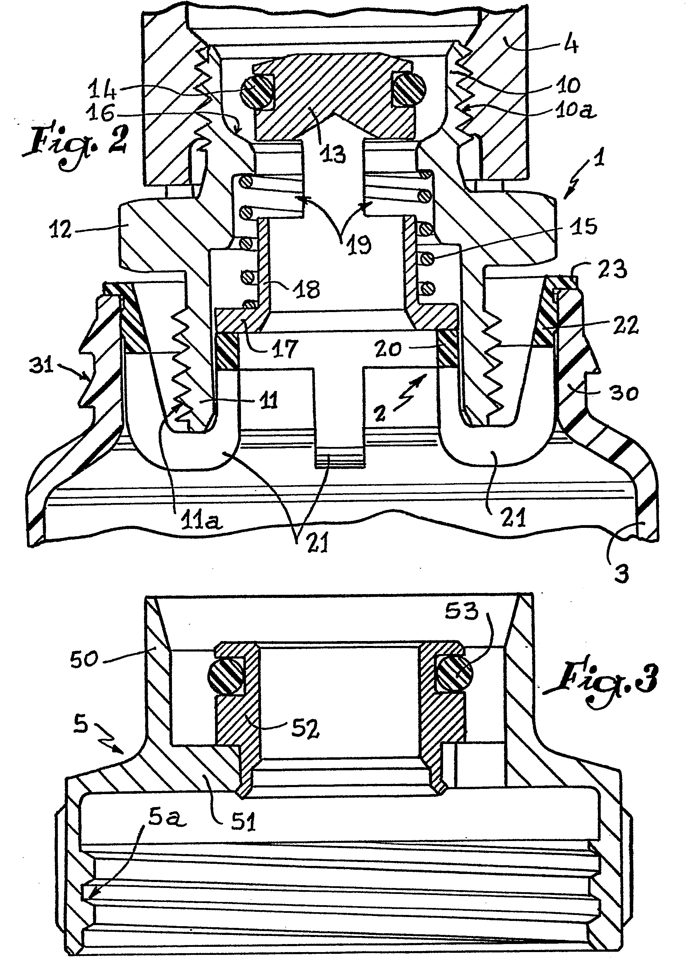

Il va de soi que la pièce 2 peut être directement solidaire du récipient 3. On peut également adopter la variante illustrée en fig. 3 suivant laquelle on adapte sur le filetage 31 du récipient 3 un chapeau 5 muni d'un taraudage 5a et dont le col rétréci 50 présente un diamètre intérieur très légèrement supérieur au diamètre externe de la tubulure 11 du manchon 1. Ce col 50 est solidaire d'un cloison annulaire 51 dans l'ouverture de laquelle est rapportée par sertissage une bague 52 pourvue d'un joint 53 et propre à former poussoir pour le rebord 17 de la queue 18 du clapet lorsque le chapeau 5 monté sur le récipient 3 est manoeuvré de la même manière que ci-dessus décrit en référence à fig. 2. Ce chapeau 5 doit être démonté du récipient 3 après prélèvement en vue de la mise en place sur celui-ci du couvercle de fermeture, à moins évidemment que ce couvercle ne soit conformé pour venir se fixer directement sur le col 50, par emboîtement ou par vissage.

Revendications

1. Appareillage pour le prélèvement d'échantillons d'huile dans le carter des moteurs à explosions et similaires, caractérisé en ce qu'il comprend en combinaison d'une part un clapet chargé (13) monté à l'intérieur d'un manchon fileté (1) propre à être adapté dans l'ouverture usuelle de vidange (4) d'un carter, et d'autre part un récipient (3) dont l'ouverture supérieure est munie axialement d'un poussoir annulaire (20, 52) apte à être introduit à force dans le débouché du manchon précité afin de repousser la queue d'actionnement (18), elle-même prévue annulaire, du clapet qui peut ainsi être maintenu ouvert, à l'encontre de ses moyens élastiques de rappel (15), jusqu'à remplissage du récipient.

2. Appareillage suivant la revendication 1, caractérisé en ce que la queue d'actionnement (18) du clapet chargé (13) est pourvue d'un rebord terminal (17) destiné à former appui pour le poussoir (20, 52) lorsque celui-ci est engagé dans l'extrémité du manchon (1).

3. Appareillage suivant l'une quelconque des revendications 1 et 2, caractérisé en ce que le poussoir est constitué par une bague (20) que des bras arqués (21) relient à une bague extérieure (22) propre à être rapportée dans l'ouverture du récipient (3), un rebord (23) de ladite bague extérieure venant prendre appui contre le bord terminal du goulot (30) dudit récipient.

4. Appareillage suivant l'une quelconque des revendications 1 et 2, caractérisé en ce que le poussoir est constitué par une bague (52) sertie dans une cloison annulaire (51) prévue dans le col rétréci (50) d'un chapeau (5), lequel est propre à être fixé sur l'ouverture du récipient (3).

Fig.1

Fig. 2

Fig. 3

Office européen
des brevets

**RAPPORT DE RECHERCHE EUROPEENNE**

**0163584**
Numéro de la demande

EP 85 42 0075

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 348 363 (H. MULLER et al.)<br>* Page 3, ligne 8 - page 4, ligne 16; figure 1 * | 1,2 | G 01 N 1/10<br>F 01 M 11/04<br>F 16 N 31/00 |
| A | * Page 4, ligne 17 - page 5, ligne 8; figure 2 * | 3,4 | |
| X | GB-A-1 347 683 (M.S. GRIFFITHS et al.)<br>* Page 2, lignes 31-56; figure 3 * | 1,2 | |
| A | | 3,4 | DOMAINES TECHNIQUES RECHERCHES (Int. Cl.4)<br><br>G 01 N 1/00<br>F 16 N 29/00<br>F 16 N 31/00<br>F 01 M 11/00 |

Le présent rapport de recherche a été établi pour toutes les revendications

| Lieu de la recherche | Date d'achèvement de la recherche | Examinateur |
|---|---|---|
| LA HAYE | 03-07-1985 | ANTHONY R.G. |